# EUROPÄISCHE PATENTANMELDUNG

(11) **EP 4 617 798 A1**
(43) Veröffentlichungstag der Anmeldung: **17.09.2025**
(21) Anmeldenummer: 25150984.0
(22) Anmeldetag: 09.01.2025
(51) Int. Cl.: G05B 13/02, B67C 3/00, G05B 13/04, G05B 17/02, G05B 19/042, B25J 9/16, B65G 43/00, G05B 19/418, B29C 49/78

(54) **VERFAHREN ZUR REGELUNG EINER BEHÄLTERBEHANDLUNGSLINIE UND BEHÄLTERBEHANDLUNGSLINIE**

(30) Priorität: 11.03.2024 DE 102024106832
(71) Anmelder: Krones AG, 93073 Neutraubling (DE)
(72) Erfinder: Clausen, Niels, 93073 Neutraubling (DE); Albrecht, Thomas, 93073 Neutraubling (DE); Boettcher, Benedikt, 93073 Neutraubling (DE)
(74) Vertreter: Grünecker Patent- und Rechtsanwälte PartG mbB

(57) **Zusammenfassung**

Die Erfindung betrifft ein Verfahren zur Regelung einer Behälterbehandlungslinie (1), die mindestens eine Maschine (2, 3, 4) zur Behälterbehandlung, mindestens eine Transporteinheit (5, 6) zum Transportieren der Behälter und eine zentrale Regeleinheit (7) umfasst. Das Verfahren umfasst:
- Empfangen von ersten Steuerungsdaten (14, 15, 16) von der mindestens einen Maschine in der zentralen Regeleinheit, Empfangen von zweiten Steuerungsdaten (17, 18) von der mindestens einen Transporteinheit in der zentralen Regeleinheit,
- Berechnen einer ersten Regelanweisung für die mindestens eine Maschine mittels einer modellbasierten Regelung basierend auf den ersten und zweiten Steuerungsdaten und/oder Berechnen einer zweiten Regelanweisung für die mindestens eine Transporteinheit mittels der modellbasierten Regelung basierend auf den ersten und zweiten Steuerungsdaten,
- Senden der ersten Regelanweisung an die mindestens eine Maschine und/oder Senden der zweiten Regelanweisung an die mindestens eine Transporteinheit,
- Regeln der mindestens einen Maschine entsprechend der ersten Regelanweisung und/oder Regeln der mindestens einen Transporteinheit entsprechend der zweiten Regelanweisung.

## Beschreibung

Die Erfindung betrifft ein Verfahren zur Regelung einer Behälterbehandlungslinie und eine Behälterbehandlungslinie gemäß den unabhängigen Ansprüchen.

### Stand der Technik

Es ist bekannt, dass Getränkeabfülllinien über Stauschalter und Lichtschranken gesteuert werden können. In den Maschinen einer Getränkeabfülllinie sind aktuell nur wenige Betriebszustände, z.B. Nennleistung 100%, Überleistung 120%, hinterlegt. Eine kontinuierliche, übergeordnete Regelung von Getränkeabfülllinien hinsichtlich der Leistung, für z.B. Energieverbrauch, Linienwirkungsgrad, Ausbringung, findet aktuell nicht statt.

Das Fehlen einer übergeordneten Linienregelung kann in der Praxis zu Situationen führen, die in einem nicht optimalen Linienverhalten resultieren können. Es kann zum Beispiel zu einem Pulsieren des Behälterstromes auf den Transporteuren kommen, in Folge dessen Behälter umkippen können, zu vermeidbaren Stopp- und Anfahrprozessen der Maschinen und damit zu erhöhtem Energieverbrauch und einem reduzierten Wirkungsgrad kommen.

### Aufgabe

Die Aufgabe der Erfindung ist es, ein Verfahren zur Regelung einer Behälterbehandlungslinie und eine Behälterbehandlungslinie zur Verfügung zu stellen, mit denen eine kontinuierliche, übergeordnete Regelung der Behälterbehandlungslinie hinsichtlich der Effizienz der Behälterbehandlungslinie ermöglicht werden kann.

### Lösung

Die Aufgabe wird gelöst durch das Verfahren zur Regelung einer Behälterbehandlungslinie und die Behälterbehandlungslinie gemäß den unabhängigen Ansprüchen. Weitere Ausführungsformen sind in den Unteransprüchen offenbart.

Das erfindungsgemäße Verfahren zur Regelung einer Behälterbehandlungslinie, die mindestens eine Maschine zur Behälterbehandlung und mindestens eine Transporteinheit zum Transportieren der Behälter sowie eine zentrale Regeleinheit umfasst, umfasst:
- Empfangen von ersten Steuerungsdaten von der mindestens einen Maschine in der zentralen Regeleinheit und Empfangen von zweiten Steuerungsdaten von der mindestens einen Transporteinheit in der zentralen Regeleinheit,
- Berechnen einer ersten Regelanweisung für die mindestens eine Maschine mittels einer modellbasierten Regelung basierend auf den ersten und zweiten Steuerungsdaten und/oder Berechnen einer zweiten Regelanweisung für die mindestens eine Transporteinheit mittels der modellbasierten Regelung basierend auf den ersten und zweiten Steuerungsdaten, wobei die modellbasierte Regelung die Behälterbehandlungslinie beschreibt und in der zentralen Regeleinheit gespeichert ist,

- Senden der ersten Regelanweisung an die mindestens eine Maschine und/oder Senden der zweiten Regelanweisung an die mindestens eine Transporteinheit,
- Regeln der mindestens eine Maschine entsprechend der ersten Regelanweisung und/oder Regeln der mindestens einen Transporteinheit entsprechend der zweiten Regelanweisung.

Die mindestens eine Maschine zur Behälterbehandlung kann ein Depalettierer, eine Behälterreinigungsmaschine, eine Wärmebehandlungsmaschine, wie beispielsweise eine Pasteurisierungsmaschine, eine Blasformmaschine, eine Füll- und Verschließvorrichtung, eine Etikettiermaschine, eine gebindeerstellende Maschine und/oder einen Palettierer umfassen.

Die mindestens eine Transporteinheit zum Transportieren der Behälter kann ein Transportband und/oder eine Vorrichtung zum Neckhandling umfassen.

Behälter können einer Maschine zur Behälterbehandlung mittels einer ersten Transporteinheit zugeführt werden, und Behälter können von dieser Maschine mittels einer zweiten Transporteinheit abgeführt werden. Beispielsweise können Behälter mittels der zweiten Transporteinheit einer nachfolgenden Maschine zur Behälterbehandlung zugeführt werden.

Allgemein können die Maschinen zur Behälterbehandlung durch Transporteinheiten verbunden sein.

Die zentrale Regeleinheit kann die einzige zentrale Regeleinheit der Behälterbehandlungslinie sein.

Das Empfangen von ersten Steuerungsdaten von der mindestens einen Maschine in der zentralen Regeleinheit und Empfangen von zweiten Steuerungsdaten von der mindestens einen Transporteinheit in der zentralen Regeleinheit kann kontinuierlich, im Wesentlichen kontinuierlich oder in vorgegebenen zeitlichen Abständen erfolgen.

Durch die empfangenen ersten und zweiten Steuerungsdaten kann der zentralen Regeleinheit ein aktueller Zustand der Maschinen und Transporteinheiten mitgeteilt werden und beispielsweise somit auch der Behälterbehandlungslinie, die die mindestens eine Maschine und die mindestens eine Transporteinheit umfasst.

Die erste Regelanweisung kann einen oder mehrere erste Regelschritte für die mindestens eine Maschine umfassen.

Die zweite Regelanweisung kann einen oder mehrere zweite Regelschritte für die mindestens eine Transporteinheit umfassen.

Das Berechnen kann ein Berechnen einer optimalen Transportgeschwindigkeit umfassen, um einen Stillstand der Maschine bei einer Maschinenstörung zu vermeiden.

Das Berechnen kann ein Berechnen einer optimalen Transportgeschwindigkeit umfassen, um beispielsweise eine oder mehrere Lücken im Behältertransport zu schließen bevor diese die Maschine erreicht/erreichen und so zu einer Störung an der Maschine führen könnten.

Es kann so möglich sein, die Behälterbehandlungslinie kontinuierlich, beispielsweise angepasst an das zeitlich dynamische Verhalten der Behälterbehandlungslinie, zu regeln und beispielweise nicht nur wie bisher anhand der wenigen hinterlegten Betriebszustände (z.B. Nennleistung 100%, Überleistung 120%).

Das Verfahren kann weiter ein Empfangen von Sensordaten von mindestens einem Sensor, der von der Behälterbehandlungslinie umfasst wird, in der zentralen Regeleinheit umfassen, wobei das Berechnen der ersten Regelanweisung und/oder das Berechnen der zweiten Regelanweisung basierend auf den ersten und zweiten Steuerungsdaten und den Sensordaten erfolgen kann. Beispielsweise kann der mindestens eine Sensor eine Lichtschranke, einen drucksensitiven Schalter, ein Mikrofon und/oder eine Temperaturmesseinrichtung umfassen.

Der mindestens eine Sensor kann derart an oder bei oder oberhalb der mindestens einen Transporteinheit angeordnet sein, sodass der mindestens eine Sensor Sensordaten bezüglich der mindestens einen Transporteinheit aufzeichnen kann.

Durch die empfangenen Sensordaten kann ein Belegungsgrad beispielsweise der mindestens einen Transporteinheit bestimmt werden (beispielsweise Lichtschranke und/oder drucksensitiven Schalter und/oder Mikrofon). Beispielsweise kann der Belegungsgrad in der zentralen Regeleinheit bestimmt werden.

Umfasst die Behälterbehandlungslinie zudem mindestens eine Puffereinrichtung, so kann durch die empfangenen Sensordaten ein Belegungsgrad der mindestens einen Puffereinrichtung bestimmt werden. Beispielsweise kann der Belegungsgrad in der zentralen Regeleinheit bestimmt werden. Der mindestens eine Sensor kann derart an oder bei oder oberhalb der mindestens einen Puffereinrichtung angeordnet sein, sodass der mindestens eine Sensor Sensordaten bezüglich der mindestens einen Puffereinrichtung aufzeichnen kann.

Beispielsweise kann mit einem als Temperaturmesseinrichtung ausgebildeten Sensor die Temperatur von Preformen gemessen werden. Je nach Lagerplatz können die Preformen unterschiedliche Temperaturen aufweisen. Beispielsweise im Winter können kalte Außentemperaturen kältere Preformen bedingen im Vergleich zu Preformen, die schon einige Zeit in einer Halle gelagert sind, in der beispielsweise auch die Behälterbehandlungslinie angeordnet ist.

Der zentralen Regeleinheit kann anhand der empfangenen Sensordaten ein detaillierter Überblick der Gesamtsituation der Behälterbehandlungslinie vermittelt werden.

Das Verfahren kann weiter ein Empfangen von Kameradaten von mindestens einer Kamera, die von der Behälterbehandlungslinie umfasst wird, in der zentralen Regeleinheit umfassen, wobei das Berechnen der ersten Regelanweisung und/oder das Berechnen der zweiten Regelanweisung basierend auf den ersten und zweiten Steuerungsdaten und/oder den Kameradaten erfolgen kann. Beispielsweise kann die mindestens eine Kamera an oder bei oder oberhalb der mindestens einen Transporteinheit angeordnet sein.

Die mindestens eine Kamera kann derart an oder bei oder oberhalb der mindestens einen Transporteinheit und/oder der mindestens einen Puffereinrichtung und/oder der mindestens einen Maschine angeordnet sein, sodass die mindestens eine Kamera Kameradaten bezüglich der mindestens einen Transporteinheit und/oder der mindestens einen Puffereinrichtung und/oder der mindestens einen Maschine aufzeichnen kann.

Durch die empfangenen Kameradaten kann ein Belegungsgrad beispielsweise der mindestens einen Transporteinheit bestimmt werden. Beispielsweise kann der Belegungsgrad in der zentralen Regeleinheit bestimmt werden.

Umfasst die Behälterbehandlungslinie zudem mindestens eine Puffereinrichtung, so kann durch die empfangenen Kameradaten ein Belegungsgrad der mindestens einen Puffereinrichtung bestimmt werden. Beispielsweise kann der Belegungsgrad in der zentralen Regeleinheit bestimmt werden. Die mindestens eine Kamera kann derart an oder bei oder oberhalb der mindestens einen Puffereinrichtung angeordnet sein, sodass die mindestens eine Kamera Kameradaten bezüglich der mindestens einen Puffereinrichtung aufzeichnen kann.

Der zentralen Regeleinheit kann anhand der empfangenen Kameradaten ein detaillierter Überblick der Gesamtsituation der Behälterbehandlungslinie vermittelt werden.

So kann es möglich sein die Behälterbehandlungslinie im Materialfluss zu beschreiben, also beispielsweise an welchem Ort wie viele Behälter sind, wieviel Prozent eines bestimmten Bereichs der mindestens einen Transporteinheit pro Zeiteinheit mit Behältern belegt sind und/oder wie viele Behälter pro Zeiteinheit einen bestimmten Bereichs der mindestens einen Transporteinheit durchwandern.

Das Verfahren kann weiter ein Verarbeiten von Bildinformationen an oder in der mindestens einen Kamera vor dem (zuvor erwähnten) Empfangen von Kameradaten von mindestens einer Kamera in der zentralen Regeleinheit umfassen. Es können somit verarbeitete Bildinformationen in den Kameradaten enthalten sein, die dann von der zentralen Regeleinheit empfangen werden können. Dadurch kann das Datenvolumen für den Datentransport reduziert werden.

Die modellbasierte Regelung kann einen modellbasierten, nichtlinearen Regelungsansatz umfassen. Dies kann aufgrund der Komplexität der zu regelnden Behälterbehandlungslinie erforderlich sein. Bei einfachen Teilstücken der Behälterbehandlungslinie könnte auch ein linearer Regler verwendet werden.

Die modellbasierte Regelung kann ein analytisches, physikalisches Modell, ein Machine Learning Modell, eine Differentialgleichung, ein neuronales Netz und/oder ein Systemmodell umfassen.

Die zentrale Regeleinheit kann ein Modellteil und ein Optimierungsteil umfassen.

Im Modellteil kann die modellbasierte Regelung umfasst sein.

Der Optimierungsteil kann im laufenden Betrieb der Behälterbehandlungslinie eine Optimierung hinsichtlich eines oder mehrerer Optimierungsziele auf Basis der ersten und zweiten Steuerungsdaten durchführen oder der Optimierungsteil kann im laufenden Betrieb der Behälterbehandlungslinie die Optimierung hinsichtlich eines oder mehrerer Optimierungsziele zudem auf Basis der ersten und zweiten Steuerungsdaten, der Sensordaten und/oder Kameradaten durchführen.

Das Optimierungsteil kann optimierte Parameter und/oder Stellgrößen an die entsprechende mindestens eine Maschine senden.

Das Verfahren kann weiter ein Überwachen der modelbasierten Regelung durch Vergleichen von Ist-Werten und Soll-Werten der Maschine basierend auf den Kameradaten und bei Überschreiten einer gegebenen Abweichung, ein Durchführen einer automatischen Parameteridentifikation umfassen. So kann die mittels der Kamera bereitgestellten Daten im laufenden Betrieb der Maschine die Qualität der modelbasierten Regelung überwacht und gegebenenfalls angepasst werden.

Durch das Vergleichen kann eine vorliegende Abweichung ermittelt werden, die dann mit der gegebenen Abweichung verglichen werden kann. Die automatische Parameteridentifikation kann zu einer Reduzierung der vorliegenden Abweichung beim weiteren Überwachen - nach der automatischen Parameteridentifikation - der modelbasierten Regelung führen.

Dadurch kann eine signifikante Verbesserung des Führungsverhalten und der Robustheit der modelbasierten Regelung erreicht werden. Beispielsweise sind verbesserte Reaktionsmöglichkeiten auf Störgrößen möglich, beispielsweise durch Änderung der Reibung der mindestens einen Transporteinheit, Temperatur, Klebrigkeit der Behälter, Bandschmierung, usw.

Das Verfahren kann weiter ein Validieren der optimierten Parameter vor dem Senden umfassen. Beispielsweise kann das Validieren ein Prüfen anhand der modellbasierten Regelung umfassen, ob eine durch eine Anwendung der optimierten Parameter erreichbare Änderung eine messbare Verbesserung des Verhaltens der Behälterbehandlungslinie bewirken kann.

Weiter ist eine Behälterbehandlungslinie umfassend mindestens eine Maschine zur Behälterbehandlung und mindestens eine Transporteinheit zum Transportieren der Behälter sowie eine zentrale Regeleinheit vorgesehen, wobei die zentrale Regeleinheit ausgebildet ist zum Ausführen des Verfahrens wie oben oder weiter unten beschrieben.

Die mindestens eine Maschine zur Behälterbehandlung kann ein Depalettierer, eine Behälterreinigungsmaschine, eine Blasformmaschine, eine Füll- und Verschließvorrichtung, eine Etikettiermaschine, eine gebindeerstellende Maschine und/oder einen Palettierer umfassen.

Die mindestens eine Transporteinheit zum Transportieren der Behälter kann ein Transportband und/oder eine Vorrichtung zum Neckhandling umfassen.

Die Behälterbehandlungslinie kann weiter mindestens eine Kamera umfassen. Beispielsweise kann die mindestens eine Kamera an oder oberhalb der mindestens einen Transporteinheit angeordnet sein.

Die mindestens eine Kamera kann derart an oder bei oder oberhalb der mindestens einen Transporteinheit und/oder einer mindestens einen Puffereinrichtung angeordnet sein, sodass die mindestens eine Kamera Kameradaten bezüglich der mindestens einen Transporteinheit und/oder der mindestens einen Puffereinrichtung aufzeichnen kann. Die mindestens eine Puffereinrichtung kann von der Behälterbehandlungslinie umfasst sein.

Die mindestens eine Kamera ausgebildet ist zum Verarbeiten von Bildinformationen an oder in der mindestens einen Kamera vor dem Empfangen von Kameradaten von der mindestens einer Kamera in der zentralen Regeleinheit.

### Kurze Figurenbeschreibung

Die beigefügte Figur stellt beispielhaft zum besseren Verständnis und zur Veranschaulichung Aspekte und/oder Ausführungsbeispiele der Erfindung dar. Es zeigt:

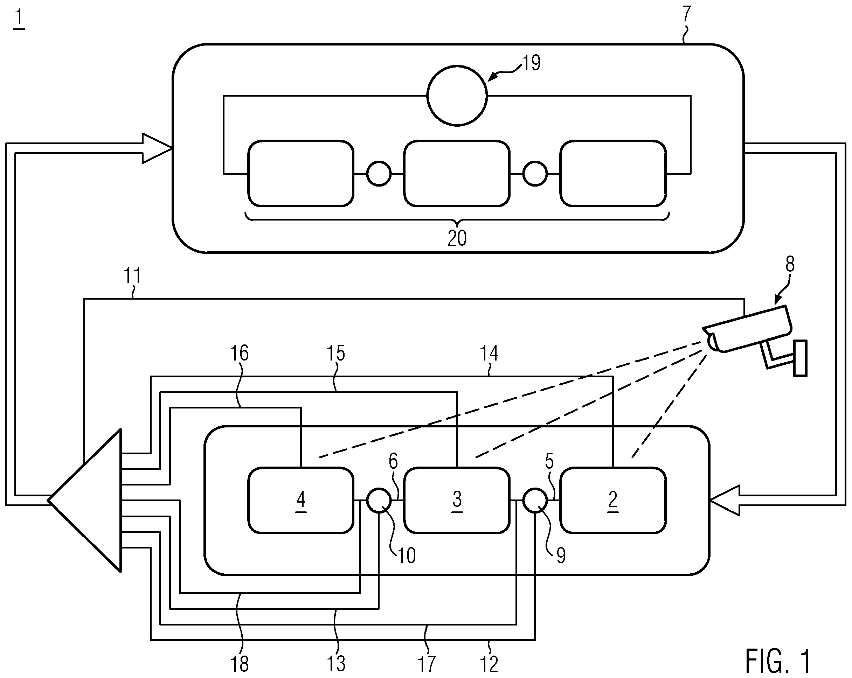

Figur 1 ein strukturelles Blockdiagramm einer Behälterbehandlungslinie umfassend Maschinen zur Behälterbehandlung, Transporteinheiten zum Transportieren von Behältern und eine zentrale Regeleinheit zum Ausführen eines Verfahrens zur Regelung der Behälterbehandlungslinie.

### Ausführliche Figurenbeschreibung

Die Figur 1 zeigt ein strukturelles Blockdiagramm einer Behälterbehandlungslinie 1 umfassend drei Maschinen 2, 3, 4 zur Behälterbehandlung, zwei Transporteinheiten 5, 6 zum Transportieren von Behältern und eine zentrale Regeleinheit 7 zum Ausführen eines Verfahrens zur Regelung der Behälterbehandlungslinie 1.

Behälter können, beispielsweise nach einer erfolgen Behälterbehandlung durch die erste Maschine 2 zur Behälterbehandlung, von der ersten Maschine 2 mittels der ersten Transporteinheit 5 abgeführt und der zweiten Maschine 3 zur Behälterbehandlung zugeführt werden. Die in der zweiten Maschine 3 behandelten Behälter können der dritten Maschine 4 zur Behälterbehandlung mittels der zweiten Transporteinheit 6 zugeführt werden.

Beispielhaft ist in der Figur 1 eine Kamera 8 dargestellt, mittels der Kameradaten 11 bezüglich der Maschinen 2, 3, 4 und/oder der Transporteinheiten 5, 6 aufgezeichnet werden können. Die Behälterbehandlungslinie 1 kann mehr als eine solche Kamera 8 umfassen. Die mindestens eine Kamera 8 kann derart an oder bei oder oberhalb der Transporteinheiten 5, 6 und/oder der Maschinen 2, 3, 4 angeordnet sein, sodass die mindestens eine Kamera 8 die Kameradaten 11 aufzeichnen kann.

Die Kameradaten 11 können von der Kamera 8 an die zentrale Regeleinheit 7 geschickt und in der zentralen Regeleinheit 7 empfangen werden.

Zwei Sensoren 9, 10 sind derart an der ersten Transporteinheit 5 und der zweiten Transporteinheit 6 angeordnet, sodass die Sensoren 9, 10 jeweils Sensordaten 12, 13 bezüglich der ersten Transporteinheit 5 bzw. der zweiten Transporteinheit 6 aufzeichnen können. Die Sensordaten 12, 13 können von den Sensoren 9, 10 an die zentrale Regeleinheit 7 geschickt und in der zentralen Regeleinheit 7 empfangen werden. Die Sensoren 9, 10 können eine Lichtschranke, einen drucksensitiven Schalter, ein Mikrofon und/oder eine Temperaturmesseinrichtung umfassen.

In der zentralen Regeleinheit 7 werden erste Steuerungsdaten 14, 15, 16 von den Maschinen 2, 3, 4 und zweite Steuerungsdaten 17, 18 von den Transporteinheiten 5, 6 empfangen.

Die zentrale Regeleinheit 7 umfasst ein Optimierungsteil 19 und ein Modellteil 20.

In der zentralen Regeleinheit 7 wird eine erste Regelanweisung für die Maschinen 2, 3, 4 mittels einer modellbasierten Regelung basierend auf den ersten und zweiten Steuerungsdaten 14, 15, 16, 17, 18 und/oder eine zweite Regelanweisung für die Transporteinheiten 5, 6 mittels der modellbasierten Regelung basierend auf den ersten und zweiten Steuerungsdaten 14, 15, 16, 17, 18 berechnet. Die modellbasierte Regelung beschreibt die Behälterbehandlungslinie 1 und in der zentralen Regeleinheit 7 gespeichert.

Alternativ kann das Berechnen der ersten Regelanweisung und/oder das Berechnen der zweiten Regelanweisung basierend auf den ersten und zweiten Steuerungsdaten 14, 15, 16, 17, 18 und den Sensordaten 12, 13 erfolgen.

Alternativ kann das Berechnen der ersten Regelanweisung und/oder das Berechnen der zweiten Regelanweisung basierend auf den ersten und zweiten Steuerungsdaten 14, 15, 16, 17, 18 und den Kameradaten 11 erfolgen.

Alternativ kann das Berechnen der ersten Regelanweisung und/oder das Berechnen der zweiten Regelanweisung basierend auf den ersten und zweiten Steuerungsdaten 14, 15, 16, 17, 18, den Sensordaten 12, 13 und den Kameradaten 11 erfolgen

Die erste Regelanweisung kann an die Maschinen 2, 3, 4 und/oder die zweite Regelanweisung kann an die Transporteinheiten 5, 6 geschickt werden. Die Maschinen 2, 3, 4 können entsprechend der ersten Regelanweisung geregelt werden und/oder die Transporteinheiten 5, 6 können entsprechend der zweiten Regelanweisung geregelt werden.

## Patentansprüche

1. Verfahren zur Regelung einer Behälterbehandlungslinie (1), die mindestens eine Maschine (2, 3, 4) zur Behälterbehandlung und mindestens eine Transporteinheit (5, 6) zum Transportieren der Behälter sowie eine zentrale Regeleinheit (7) umfasst, wobei das Verfahren umfasst:
- Empfangen von ersten Steuerungsdaten (14, 15, 16) von der mindestens einen Maschine (2, 3, 4) in der zentralen Regeleinheit (7) und Empfangen von zweiten Steuerungsdaten (17, 18) von der mindestens einen Transporteinheit (5, 6) in der zentralen Regeleinheit (7),
- Berechnen einer ersten Regelanweisung für die mindestens eine Maschine (2, 3, 4) mittels einer modellbasierten Regelung basierend auf den ersten und zweiten Steuerungsdaten (14, 15, 16, 17, 18) und/oder Berechnen einer zweiten Regelanweisung für die mindestens eine Transporteinheit (5, 6) mittels der modellbasierten Regelung basierend auf den ersten und zweiten Steuerungsdaten (14, 15, 16, 17, 18), wobei die modellbasierte Regelung die Behälterbehandlungslinie (1) beschreibt und in der zentralen Regeleinheit (7) gespeichert ist,
- Senden der ersten Regelanweisung an die mindestens eine Maschine (2, 3, 4) und/oder Senden der zweiten Regelanweisung an die mindestens eine Transporteinheit (5, 6),
- Regeln der mindestens einen Maschine (2, 3, 4) entsprechend der ersten Regelanweisung und/oder Regeln der mindestens einen Transporteinheit (5, 6) entsprechend der zweiten Regelanweisung.

2. Das Verfahren nach Anspruch 1, weiter umfassend:
- Empfangen von Sensordaten (12, 13) von mindestens einem Sensor (9, 10), der von der Behälterbehandlungslinie (1) umfasst wird, in der zentralen Regeleinheit (7),
wobei das Berechnen der ersten Regelanweisung und/oder das Berechnen der zweiten Regelanweisung basierend auf den ersten und zweiten Steuerungsdaten (14, 15, 16, 17, 18) und den Sensordaten (12, 13) erfolgt,
wobei beispielsweise der mindestens eine Sensor (9, 10) eine Lichtschranke, einen drucksensitiven Schalter, ein Mikrofon und/oder eine Temperaturmesseinrichtung umfasst.

3. Das Verfahren nach Anspruch 1 oder 2, weiter umfassend:
- Empfangen von Kameradaten (11) von mindestens einer Kamera (8), die von der Behälterbehandlungslinie (1) umfasst wird, in der zentralen Regeleinheit (7),
wobei das Berechnen der ersten Regelanweisung und/oder das Berechnen der zweiten Regelanweisung basierend auf den ersten und zweiten Steuerungsdaten (14, 15, 16, 17, 18) und/oder den Kameradaten (11) erfolgt,
wobei beispielsweise die mindestens eine Kamera (8) an oder oberhalb der mindestens einen Transporteinheit (5, 6) angeordnet ist.

4. Das Verfahren nach Anspruch 3, weiter umfassend:
- Verarbeiten von Bildinformationen an oder in der mindestens einen Kamera (8) vor dem Empfangen von Kameradaten (11) von mindestens einer Kamera (8), die von der Behälterbehandlungslinie (1) umfasst wird, in der zentralen Regeleinheit (7).

5. Das Verfahren nach einem der Ansprüche 1 bis 4, wobei die modellbasierte Regelung umfasst: einen modellbasierten, nichtlinearen Regelungsansatz.

6. Das Verfahren nach einem der Ansprüche 1 bis 5, wobei die modellbasierte Regelung umfasst: ein analytisches, physikalisches Modell, ein Machine Learning Modell, eine Differentialgleichung, ein neuronales Netz und/oder ein Systemmodell.

7. Das Verfahren nach einem der Ansprüche 1 bis 6, wobei die zentrale Regeleinheit (7) ein Modellteil (20) und ein Optimierungsteil (19) umfasst.

8. Das Verfahren nach Anspruch 7, wobei der Optimierungsteil (19) im laufenden Betrieb der Behälterbehandlungslinie (1) eine Optimierung hinsichtlich eines oder mehrerer Optimierungsziele auf Basis der ersten und zweiten Steuerungsdaten (14, 15, 16, 17, 18) durchführt oder wobei der Optimierungsteil (19) im laufenden Betrieb der Behälterbehandlungslinie (1) die Optimierung hinsichtlich eines oder mehrerer Optimierungsziele zudem auf Basis der ersten und zweiten Steuerungsdaten (14, 15, 16, 17, 18), der Sensordaten (12, 13) und/oder Kameradaten (11) durchführt.

9. Das Verfahren nach Anspruch 7 oder 8, wobei das Optimierungsteil (19) optimierte Parameter und/oder Stellgrößen an die entsprechende mindestens eine Maschine (2, 3, 4) sendet.

10. Das Verfahren nach Anspruch 9, weiter umfassend:
Überwachen der modellbasierten Regelung durch Vergleichen von Ist-Werten und Soll-Werten der Maschine basierend auf den Kameradaten und bei Überschreiten einer gegebenen Abweichung,
Durchführen einer automatischen Parameteridentifikation.

11. Das Verfahren nach Anspruch 9 oder 10, weiter umfassend:
- Validieren der optimierten Parameter vor dem Senden,
wobei beispielsweise das Validieren ein Prüfen anhand der modellbasierten Regelung umfasst, ob eine durch eine Anwendung der optimierten Parameter erreichbare Änderung eine messbare Verbesserung des Verhaltens der Behälterbehandlungslinie (1) bewirkt.

12. Behälterbehandlungslinie (1) umfassend mindestens eine Maschine (2, 3, 4) zur Behälterbehandlung und mindestens eine Transporteinheit (5, 6) zum Transportieren der Behälter sowie eine zentrale Regeleinheit (7), wobei die zentrale Regeleinheit (7) ausgebildet ist zum Ausführen des Verfahrens nach einem der Ansprüche 1 bis 3, 5 bis 11.

13. Die Behälterbehandlungslinie nach Anspruch 12, weiter umfassend mindestens eine Kamera (8), wobei beispielsweise die mindestens eine Kamera (8) an oder oberhalb der mindestens einen Transporteinheit (5, 6) und/oder der mindestens einen Maschine (2, 3, 4) angeordnet ist.

14. Die Behälterbehandlungslinie nach Anspruch 13, wobei die mindestens eine Kamera (8) ausgebildet ist zum Verarbeiten von Bildinformationen an oder in der mindestens einen Kamera (8) vor dem Empfangen von Kameradaten (11) von der mindestens einer Kamera (8) in der zentralen Regeleinheit (7).
